# EUROPEAN PATENT APPLICATION

(11) **EP 2 410 662 A1**
(43) Date of publication of application: **25.01.2012**
(21) Application number: 10753504.9
(22) Date of filing: 16.03.2010
(51) Int. Cl.: H04B 1/713, H04B 7/12, H04J 1/00, H04J 11/00, H04W 72/04

(54) **RADIO BASE STATION APPARATUS, MOBILE TERMINAL APPARATUS AND WIRELESS ACCESS METHOD**

(30) Priority: 16.03.2009 JP 2009063392
(71) Applicant: NTT DOCOMO, INC., Chiyoda-ku Tokyo 100-6150 (JP)
(72) Inventor: MIKI, Nobuhiko, Tokyo 100-6150 (JP); KAWAMURA, Teruo, Tokyo 100-6150 (JP); SAWAHASHI, Mamoru, Tokyo 100-6150 (JP)
(74) Representative: HOFFMANN EITLE
(86) International application number: PCT/JP2010/054396
(87) International publication number: WO 2010/107012

(57) **Abstract**

To provide a radio base station apparatus, a mobile terminal apparatus and a radio access method that support each of a plurality of mobile communication systems when the plurality of mobile communication systems coexists, the configuration is provided in which in transmission in a mobile communication system having a system band comprised of a plurality of component carriers, the transmission data is subj ected to frequency hopping in a single component carrier in a subframe, while being subjected to frequency hopping over mutually different component carriers in prior and subsequent subframes.

## Description

### TECHNICAL FIELD

The present invention relates to a radio base station apparatus, a mobile terminal apparatus, and a radio access method in the next-generation mobile communication system.

### BACKGROUND ART

In UMTS (Universal Mobile Telecommunications System) networks, for the purpose of improving frequency usage efficiency and further improving data rates, by adopting HSDPA (High Speed Downlink Packet Access) and HSUPA (High Speed Uplink Packet Access), it is performed exploiting maximum features of the system based on W-CDMA (Wideband Code Division Multiple Access). For the UMTS network, for the purpose of further increasing high-speed data rates, providing low delay and the like, Long Term Evolution (LTE) has been studied (Non-patent Document 1). In LTE, as a multiplexing scheme, OFDMA (Orthogonal Frequency Division Multiple Access) different from W-CDMA is used in downlink, and SC-FDMA (Single Carrier Frequency Division Multiple Access) is used in uplink.

In the 3G system, a fixed band of 5 MHz is substantially used, and it is possible to achieve transmission rates of approximately maximum 2 Mbps in downlink. Meanwhile, in the LTE system, using variable bands ranging from 1.4 MHz to 20 MHz, it is possible to achieve transmission rates of maximum 300 Mbps in downlink and about 75 Mbps in uplink. Further, in the UMTS network, for the purpose of further increasing the wide-band and high speed, successor systems to LTE have been studied (for example, LTE Advanced (LTE-A)). Accordingly, it is conceivable that such a plurality of mobile communication systems coexists in the future, and configurations (radio base station apparatus, mobile terminal apparatus, etc.) capable of supporting the plurality of systems are considered necessary.

### CITATION LIST

### NON-PATENT LITERATURE

[Non-patent Literature 1] 3GPP, TR25. 912 (V7.1.0), "Feasibility study for Evolved UTRA and UTRAN", Sep. 2006

### SUMMARY OF THE INVENTION

### TECHNICAL PROBLEM

The present invention was made in view of such a respect, and it is an object of the invention to provide a radio base station apparatus, a mobile terminal apparatus and a radio access method that support each of a plurality of mobile communication systems when the plurality of mobile communication systems coexists.

### SOLUTION TO PROBLEM

A radio base station apparatus of the invention comprises a transmitting section configured to transmit downlink transmission data using a system band comprised of a plurality of base frequency blocks, and a hopping section configured to apply frequency hopping for the downlink transmission data to be transmitted by the transmitting section over the plurality of base frequency blocks.

### TECHNICAL ADVANTAGE OF THE INVENTION

According to the invention, the transmission data is subjected to frequency hopping over a plurality of base frequency blocks, and therefore, as compared with the case of applying frequency hopping in a single base frequency block, it is possible to obtain a sufficient frequency diversity effect.

### BRIEF DESCRIPTION OF THE DRAWINGS

FIG. 1 is an explanatory view of a system band of an LTE system;
FIG. 2 is a block diagram illustrating a transmission system processing configuration of a radio base station apparatus in this Embodiment;
FIG. 3 is a block diagram illustrating a reception system processing configuration of a mobile terminal apparatus in this Embodiment;
FIG. 4 is an explanatory view of the first hopping pattern in this Embodiment;
FIG. 5 is an explanatory view of the second hopping pattern in this Embodiment;
FIG. 6 is an explanatory view of the third hopping pattern in this Embodiment;
FIG. 7 is an explanatory view of the fourth hopping pattern in this Embodiment;
FIG. 8 is a block diagram illustrating a transmission system processing configuration of the mobile terminal apparatus in this Embodiment; and
FIG. 9 is a block diagram illustrating a reception system processing configuration of the radio base station apparatus in this Embodiment.

### DESCRIPTION OF EMBODIMENTS

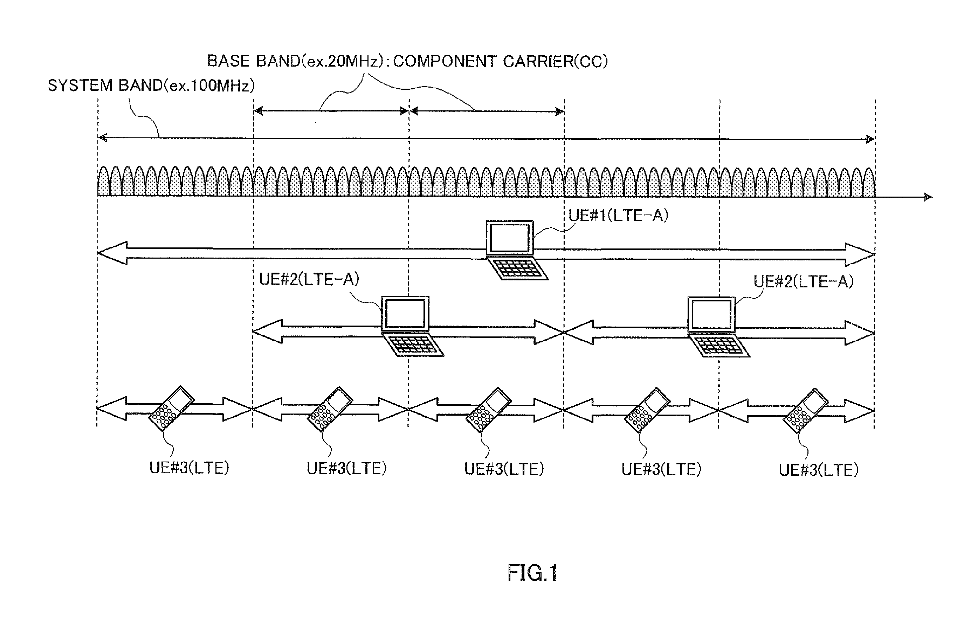

FIG. 1 is a diagram to explain the frequency usage state when mobile communication is performed in downlink. In addition, in the following description, the description is given with a base frequency block assumed to be a component carrier. An example as shown in FIG.1 is of the frequency usage state in the case of coexistence of an LTE-A system that is the first mobile communication system having the relatively wide first system band comprised of a plurality of component carriers, and an LTE system that is the second mobile communication system having the relatively narrow second system band (herein, comprised of a single component carrier.). For example, in the LTE-A system, radio communication is performed in a variable system bandwidth of 100 MHz or less, and in the LTE system, radio communication is performed in a variable system bandwidth of 20 MHz or less. The system band of the LTE-A system is at least one base frequency region (component carrier: CC) with a system band of the LTE system as a unit. Thus integrating a plurality of base frequency regions into a wide band is called carrier aggregation.

For example, in FIG. 1, the system band of the LTE-A system is a system band (20 MHz x 5 =100 MHz) containing five component carrier bands in which a system band (base band: 20 MHz) of the LTE system is a single component carrier. In FIG. 1, a mobile terminal apparatus UE (User Equipment) #1 is a mobile terminal apparatus supporting the LTE-A system (also supporting the LTE system) and has a system band of 100 MHz, UE #2 is a mobile terminal apparatus supporting the LTE-A system (also supporting the LTE system) and has a system band of 40 MHz (20 MHz x 2 =40 MHz), and UE #3 is a mobile terminal apparatus supporting the LTE system (not supporting the LTE-A system) and has a system band of 20 MHz (base band).

Further, in the LTE system, to improve deterioration in the communication quality due to degradation of propagation environment, etc., frequency hopping is applied in a single component carrier. In the case of applying frequency hopping in the LTE system to LTE-A systems, although the system band is extended using a plurality of component carriers, it is conceivable that any sufficient frequency diversity effect is not obtained.

Therefore, the inventors of the invention arrived at the invention to solve the problem. In other words, the gist of the invention is to obtain the sufficient frequency diversity effect by applying frequency hopping for transmission data over a plurality of component carriers in transmitting the data in a mobile communication system with a system band comprised of a plurality of component carriers.

An Embodiment of the invention will specifically be described below with reference to accompanying drawings. Described herein is the case of using a radio base station apparatus and mobile terminal apparatuses supporting the LTE-A system.

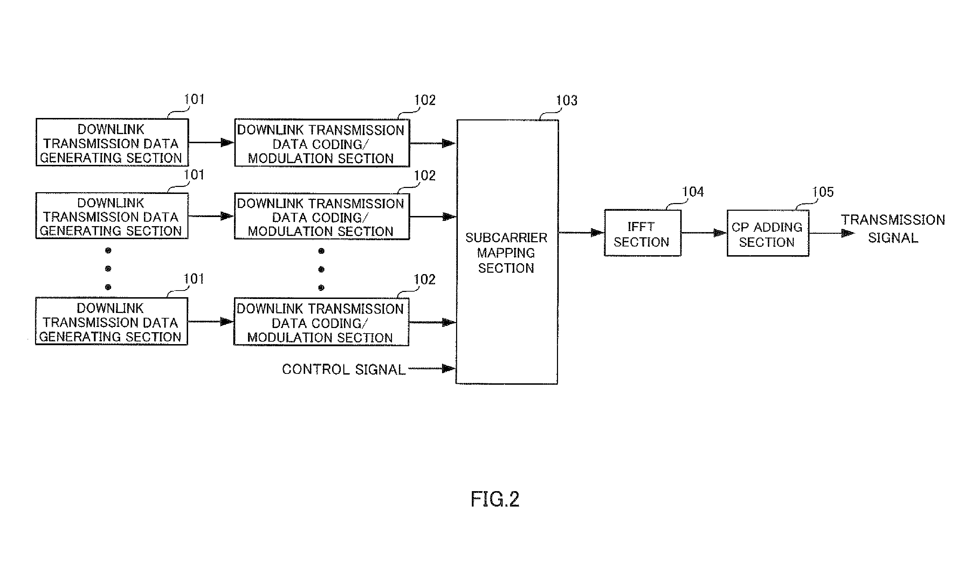

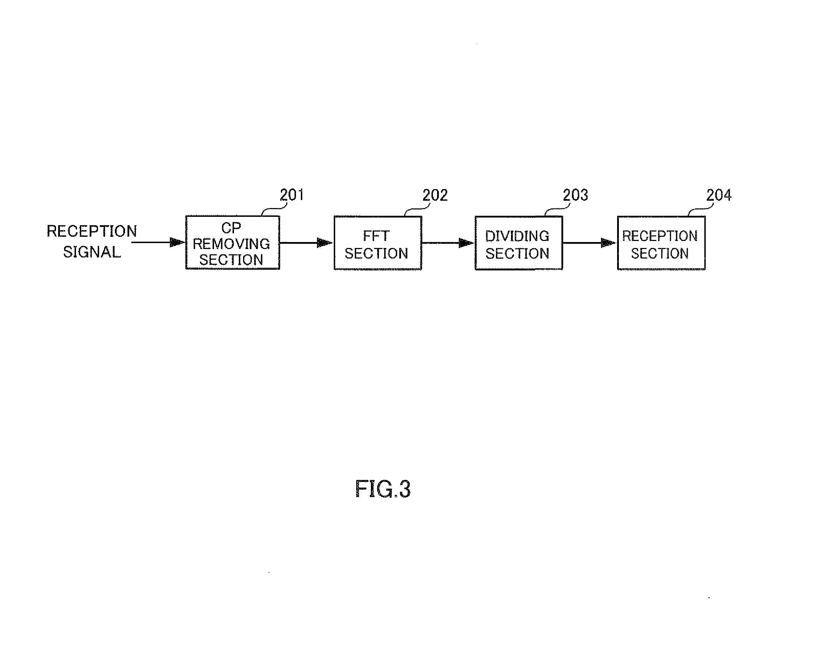

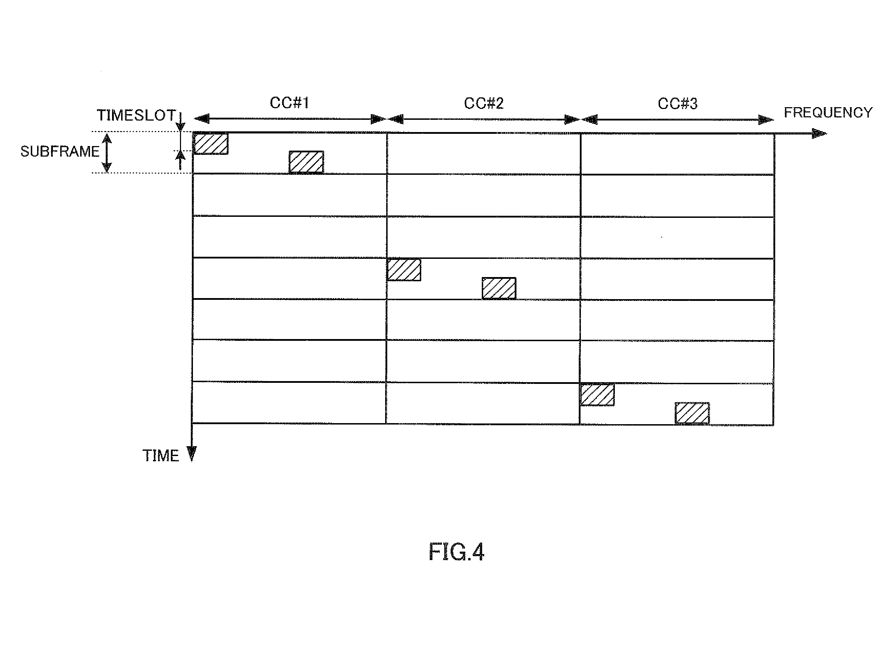

Downlink configurations will be described with reference to FIGs. 2 to 7. FIG. 2 is a block diagram illustrating a transmission system processing configuration of a radio base station apparatus according to an Embodiment of the invention. FIG. 3 is a block diagram illustrating a reception system processing configuration of a mobile terminal apparatus according to the Embodiment of the invention. FIGs. 4 to 7 are explanatory views of the first hopping pattern to the fourth hopping pattern according to the Embodiment of the invention.

Described first is a downlink configuration of the radio base station apparatus. As shown in FIG. 2, a transmission system processing section of the radio base station apparatus has a downlink transmission data generating section 101 that generates downlink transmission data for each connected user, a downlink transmission data coding/modulation section 102 that performs coding and modulation on the downlink transmission data generated for each user, a subcarrier mapping section 103 that multiplexes downlink transmission data for each user to map to component carriers, an IFFT (Inverse Fast Fourier Transform) section 104 that performs IFFT on the mapped downlink transmission data, and a CP adding section 105 that adds a cyclic prefix (CP) to the downlink transmission data.

The downlink transmission data generating section 101 generates downlink transmission data including user data, etc. using data delivered from an upper layer, and outputs the generated downlink transmission data to the downlink transmission data coding/modulation section 102. The downlink transmission data coding/modulation section 102 adds error correcting codes to the downlink transmission data, while modulating the downlink transmission data using QPSK (Quadrature Phase Shift Keying), QAM (Quadrature Amplitude Modulation), etc. for each of a plurality of subcarriers.

The subcarrier mapping section 103 multiplexes the downlink transmission data performed code modulation for each user and control signals including hopping information, while mapping the downlink transmission data to the frequency region of the component carriers. In this case, the subcarrier mapping section 103 performs mapping so as to apply frequency hopping for the downlink transmission data over a plurality of component carriers. Hopping patterns by the subcarrier mapping section 103 will be described below.

In addition, in the following description, applying frequency hopping for the transmission data within a single component carrier is referred to as intra-CC frequency hopping, applying frequency hopping for the transmission data over a plurality of component carriers is referred to as inter-CC frequency hopping, and applying hopping for the transmission data in the time-axis direction over prior and subsequent subframes is referred to as inter-subframe hopping. Further, in the hopping patters below, an example will be described where a subframe assigned onto the time axis is comprised of two consecutive time slots.

As shown in FIG. 4, in a first hopping pattern, the transmission data transmitted in each subframe is subjected to intra-CC frequency hopping, while the transmission data transmitted over subframes with prior and subsequent transmission timings is subjected to inter-CC frequency hopping. More specifically, transmission data transmitted in a single subframe is assigned to different component carriers. Further, transmission data assigned to different time slots in a single component carrier is mapped to different frequency regions.

For example, in FIG. 4, the subcarrier mapping section 103 maps transmission data transmitted in the first time slot and the second time slot of a subframe at first transmission timing to respective different frequency regions of the first component carrier CC#1. The section 103 maps transmission data transmitted in the first time slot and the second time slot of a subframe at next transmission timing to respective different frequency regions of the second component carrier CC#2. The section 103 maps transmission data transmitted in the first time slot and the second time slot of a subframe at further next transmission timing to respective different frequency regions of a third component carrier CC#3. Then, the section 103 performs mapping so that this mapping pattern is repeated at subsequent transmission timings.

Thus, in the first hopping pattern, since the transmission data transmitted in subframes with prior and subsequent transmission timings is subjected to frequency hopping over a plurality of component carriers with the passage of time, it is possible to obtain a sufficient frequency diversity effect. Particularly, this pattern is effective in the case where the propagation environment of a single component carrier deteriorates as a whole. Further, the same configuration as in the LTE system is provided in each component carrier, and therefore, compatibility with the LTE system is high.

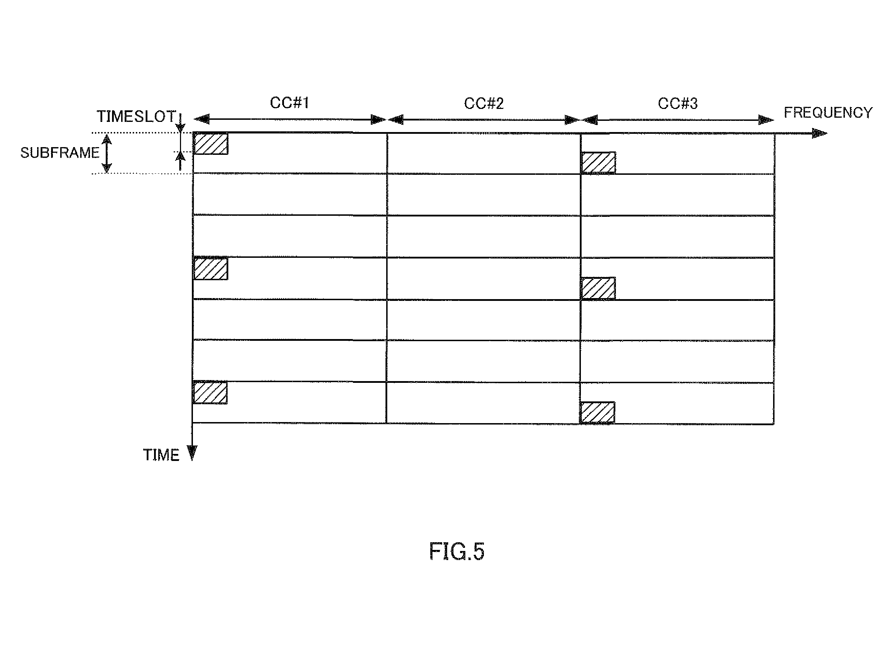

As shown in FIG. 5, in the second hopping pattern, transmission data transmitted in each subframe is subjected to inter-CC frequency hopping. More specifically, in the second hopping pattern, transmission data transmitted in each time slot in a single subframe is mapped to a frequency region across a plurality of component carriers.

For example, in FIG. 5, the subcarrier mapping section 103 maps transmission data transmitted in the first time slot of a subframe at first transmission timing to the frequency region of the first component carrier CC#1, and maps transmission data transmitted in the second time slot to the frequency region of the third component carrier CC#3. Then, the section 103 performs mapping so that this mapping pattern is repeated at subsequent transmission timings.

Thus, in the second hopping pattern, since the transmission data transmitted in a subframe is subjected to frequency hopping over a plurality of component carriers with the passage of time, it is possible to obtain a frequency diversity effect greater than in the first hopping pattern. Particularly, this pattern is effective in the case where the propagation environment deteriorates partially in a component carrier.

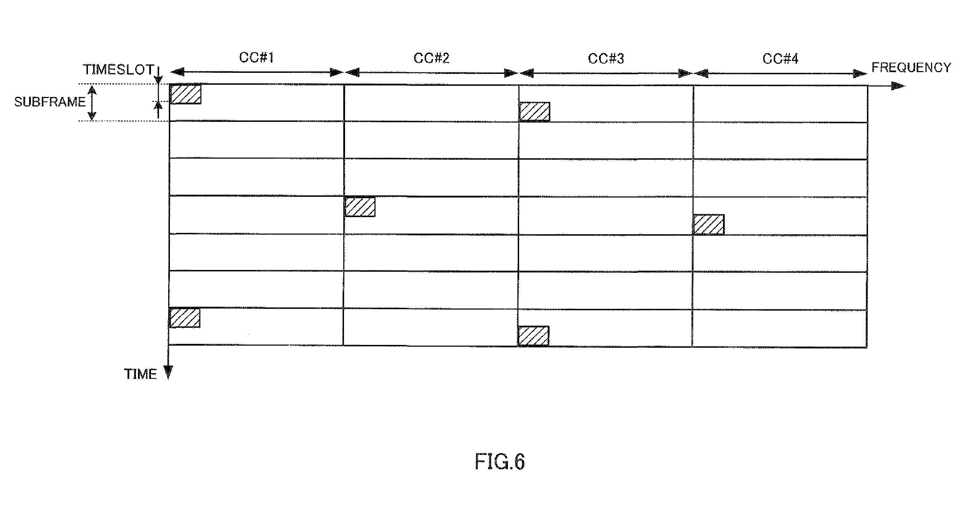

As shown in FIG. 6, in the third hopping pattern, transmission data transmitted in each subframe is subjected to inter-CC frequency hopping, while transmission data transmitted in subframes with prior and subsequent transmission timings is subjected to inter-CC frequency hopping. More specifically, transmission data transmitted in different subframes is assigned to different component carriers. Further, transmission data transmitted in each time slot in a single subframe is mapped to a frequency region of a different component carrier.

For example, in FIG. 6, the subcarrier mapping section 103 maps transmission data transmitted in the first time slot of a subframe at first transmission timing to the frequency region of the first component carrier CC#1, and maps transmission data transmitted in the second time slot to the frequency region of the third component carrier CC#3. The section 103 maps transmission data transmitted in the first time slot of a subframe at next transmission timing to the frequency region of the second component carrier CC#2, and maps transmission data transmitted in the second time slot to the frequency region of the fourth component carrier CC#4. Then, the section 103 performs mapping so that this mapping pattern is repeated at subsequent transmission timings.

Thus, in the third hopping pattern, since with the passage of time the transmission data transmitted in a subframe is subjected to frequency hopping over a plurality of component carriers, while the transmission data transmitted in subframes with prior and subsequent transmission timings is subj ected to frequency hopping over a plurality of component carriers, it is possible to obtain a frequency diversity effect greater than in the second hopping pattern. Particularly, not only the case where the propagation environment of a single component carrier deteriorates as a whole, this pattern is also effective in the case where the propagation environment deteriorates partially in a component carrier.

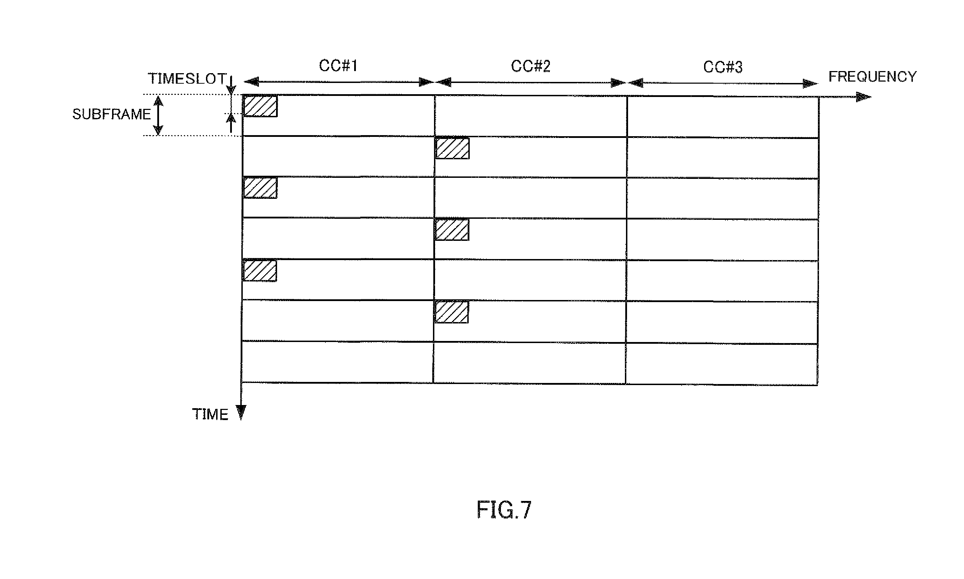

As shown in FIG. 7, in a fourth hopping pattern, transmission data transmitted in a subframe is subjected to inter-subframe hopping, and transmission data transmitted in subframes with prior and subsequent transmission timings is subjected to inter-CC frequency hopping. More specifically, part of the transmission data transmitted in a prior subframe is assigned to a time slot of a subsequent subframe. Further, the transmission data transmitted in a single subframe is mapped to a frequency region of a different component carrier.

For example, in FIG. 7, the subcarrier mapping section 103 maps transmission data transmitted in the first time slot of a subframe at first transmission timing to the frequency region of the first component carrier CC#1, and maps transmission data transmitted in the first slot of a subframe at next transmission timing to the frequency region of the second component carrier CC#2. Then, the section 103 performs mapping so that this hopping pattern is repeated at subsequent transmission timings.

Thus, in the fourth hopping pattern, since the transmission data transmitted in subframes with prior and subsequent transmission timings is subjected to frequency hopping over a plurality of component carriers with the passage of time, it is possible to obtain a frequency diversity effect greater than in the second hopping pattern. Particularly, this pattern is effective in the case where the propagation environment deteriorates partially in a component carrier.

Referring to FIG. 2 again, the IFFT section 104 transforms the downlink transmission data mapped to the component carrier from the signal in the frequency domain into the signal in the time domain by the IFFT processing, and outputs the resultant to the CP adding section 105. The CP adding section 105 adds a cyclic prefix to the downlink transmission data. The downlink transmission data passed through the CP adding section 105 is transmitted to the mobile terminal apparatus as a downlink signal. In this case, for example, the user data included in the downlink transmission data is transmitted on the PDSCH (Physical Downlink Shared Channel), etc. and the control signal included in the downlink transmission data is transmitted on the PDCCH (Physical Downlink Control Channel), etc.

Described next is a downlink configuration of the mobile terminal apparatus. As shown in FIG. 3, a reception system processing section of the mobile terminal apparatus has a CP removing section 201 that removes the CP from received downlink reception data, an FFT (Fast Fourier Transform) section 202 that performs FFT on the downlink reception data, and a dividing section 203 that divides the downlink reception data to extract data to the mobile terminal apparatus.

The CP removing section 201 removes the cyclic prefix from the downlink reception data to output to the FFT section 202. The FFT section 202 transforms the downlink reception data from the signal in the time domain into the signal in the frequency domain by the FFT processing, and outputs the transformed signal to the dividing section 203. The dividing section 203 extracts hopping information from the control signal of the downlink reception data, and based on the hopping information, extracts the data to the mobile terminal apparatus from the downlink reception data to output to a reception section 204.

Thus, in the downlink configuration, the radio base station apparatus performs mapping so as to apply frequency hopping for the downlink transmission data over a plurality of component carriers, and transmits the data to the mobile terminal apparatus. Then, the mobile terminal apparatus extracts the data to the mobile terminal apparatus from the downlink reception data based on the hopping information. Accordingly, it is possible to obtain the diversity effect, as compared with the configuration in which frequency hopping is applied in a single component carrier in the LTE system in downlink.

In addition, in the above-mentioned downlink configuration, the radio base station apparatus multiplexes the control signal including the hopping information into the downlink transmission data, and notifies the mobile terminal apparatus of the hopping pattern, but the specification is not limited to this configuration. It is essential only that the mobile terminal apparatus recognizes the hopping pattern, and for example, when the hopping pattern is determined by standards, it is not necessary to notify the mobile terminal apparatus of the hopping pattern.

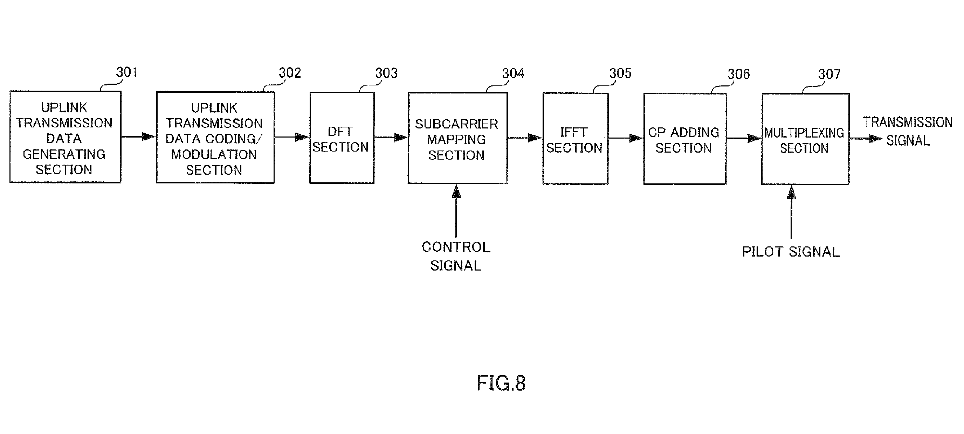

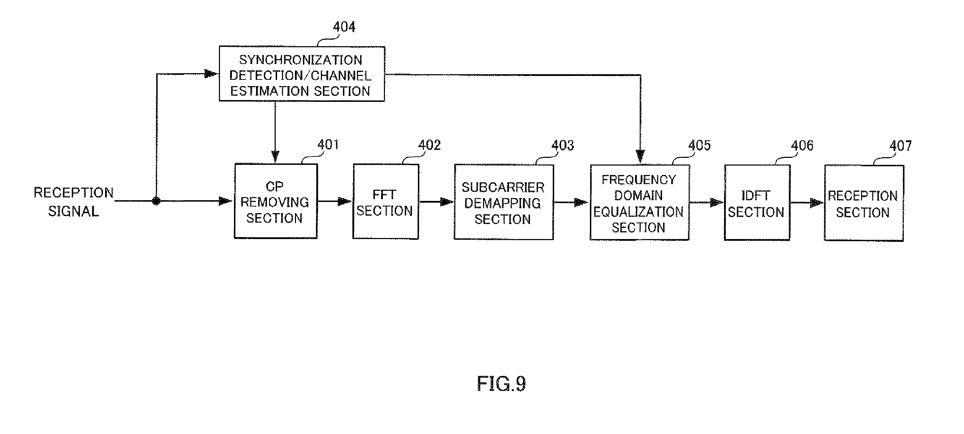

Uplink configurations will be described with reference to FIGs. 8 and 9. FIG. 8 is a block diagram of a transmission system processing configuration of the mobile terminal apparatus according to the Embodiment of the invention. FIG. 9 is a block diagram illustrating a reception system processing configuration of the radio base station apparatus according to the Embodiment of the invention. Inaddition, in the uplink configuration, since frequency hopping is applied in the same hopping pattern as in the downlink configuration, the description of the hopping pattern is omitted.

Described first is an uplink configuration of the mobile terminal apparatus. As shown in FIG. 8, a transmission system processing section of the mobile terminal apparatus has an uplink transmission data generating section 301 that generates uplink transmission data, an uplink transmission data coding/modulation section 302 that performs coding and modulation on the uplink transmission data, a DFT (Discrete Fourier Transform) section 303 that performs DFT on the uplink transmission data, a subcarrier mapping section 304 that maps the DFT-processed uplink transmission data, an IFFT section 305 that performs IFFT processing on the mapped uplink transmission data, a CP adding section 306 that adds a cyclic prefix to the uplink transmission data, and a multiplexing section 307 that multiplexes pilot signals into the uplink transmission data.

The uplink transmission data generating section 301 generates uplink transmission data including user data, etc. using data delivered from an upper layer, and outputs the generated uplink transmission data to the uplink transmission data coding/modulation section 302. The uplink transmission data coding/modulation section 302 adds error correcting codes to the uplink transmission data, while modulating the uplink transmission data for each of a plurality of subcarriers. The DFT section 303 transforms the uplink transmission data performed code modulation from the signal in the time domain into the signal in the frequency domain by the DFT processing, and outputs the transformed uplink transmission data to the subcarrier mapping section 304.

The subcarrier mapping section 304 multiplexes the control signal including the hopping information into the DFT-processed uplink transmission data, while performing mapping so as to apply frequency hopping for the uplink transmission data over a plurality of component carriers. In this case, the section 304 applies hopping with various hopping patterns as descried above.

The IFFT section 305 transforms the uplink transmission data mapped to the component carrier from the signal in the frequency domain into the signal in the time domain by the IFFT processing, and outputs the resultant to the CP adding section 306. The CP adding section 306 adds a cyclic prefix to the uplink transmission data to output to the multiplexing section 307. The multiplexing section 307 multiplexes pilot signals for synchronization detection and estimation of propagation environment of the propagation channel into the uplink transmission data. The transmission data passed through the multiplexing section 307 is transmitted to the radio base station apparatus as an uplink signal. In this case, for example, the user data included in the uplink transmission data is transmitted on the PUSCH, etc. and the control signal included in the uplink transmission data is transmitted on the PUCCH, etc.

Described next is an uplink conf iguration of the radio base station apparatus. As shown in FIG. 9, a reception system processing section of the radio base station apparatus has a CP removing section 401 that removes the CP from received uplink reception data, an FFT (Fast Fourier Transform) section 402 that performs FFT on the uplink reception data, a subcarrier demapping section 403 that demaps the FFT-processed uplink reception data, a synchronization detection/channel estimation section 404 that performs synchronization detection and channel estimation based on the received pilot signal, a frequency domain equalization section 405 that removes channel distortion from the uplink reception data, and an IDFT (Inverse Discrete Fourier Transform) section 406 that performs IDFT on the uplink reception data.

The uplink reception data transmitted to the radio base station apparatus is input to the CP removing section 401, and the pilot signal divided from the uplink reception data is input to the synchronization detection/channel estimation section 404. The synchronization detection/channel estimation section 404 incorporates a synchronization detection circuit and channel estimation section, and based on the pilot signal, performs synchronization detection in the synchronization detection circuit, while estimating the propagation environment of channel distortion in the phase and amplitude of each subcarrier, etc. in the channel estimation section. The processing timing of the CP removing section 401 and FFT section 402 is controlled by synchronization detection in the synchronization detection circuit, and the equalization processing by the frequency domain equalization section 405 is controlled by an estimation result of the channel estimation section.

The CP removing section 401 removes the cyclic prefix from the uplink reception data to output to the FFT section 402. The FFT section 402 transforms the uplink reception data from the signal in the time domain into the signal in the frequency domain by the FFT processing, and outputs the transformed signal to the subcarrier demapping section 403. The subcarrier demapping section 403 extracts hopping information from the control signal of the uplink reception data, and based on the hopping information, extracts the data to the radio base station apparatus from the uplink reception data to output to the frequency domain equalization section 405.

Based on the channel estimation result of the synchronization detection/channel estimation section 404, the frequency domain equalization section 405 removes channel distortion in the phase and amplitude of each subcarrier of the uplink reception data to output to the IDFT section 406. The IDFT section 406 transforms the equalization-processed uplink reception data from the signal in the frequency domain into the signal in the time domain by the IDFT processing to output to a reception section 407.

Thus, in the uplink configuration, the mobile terminal apparatus performs mapping so as to apply frequency hopping for the uplink transmission data over a plurality of component carriers, and transmits the data to the radio base station apparatus. Then, the radio base station apparatus performs demapping to extract the data based on the hopping information. Accordingly, it is possible to obtain the diversity effect, as compared with the configuration in which frequency hopping is applied in a single component carrier in the LTE system in uplink.

In addition, in the above-mentioned uplink configuration, the mobile terminal apparatus multiplexes the control signal including the hopping information into the uplink transmission data, and notifies the radio base station apparatus of the hopping pattern, but the specification is not limited to this configuration. It is essential only that the radio base station apparatus recognizes the hopping pattern, and for example, when the hopping pattern is determined by standards, it is not necessary to notify the radio base station apparatus of the hopping pattern.

As described above, according to the mobile communication system according to this Embodiment, the transmission data is subjected to frequency hopping over a plurality of component carriers, and therefore, as compared with the case of applying frequency hopping in a single component carrier, it is possible to obtain a sufficient frequency diversity effect.

In addition, the above-mentioned Embodiment exemplifies the first hopping pattern to the fourth hopping pattern to describe, but hopping patterns are not limited thereto. Any hopping pattern is adopted, as long as the hopping pattern is to apply frequency hopping for the transmission data over a plurality of component carriers.

Further, the above-mentioned Embodiment describes the configuration in which frequency hopping is applied using one hopping pattern among the first hopping pattern to the fourth hopping pattern, but the specification is not limited to the configuration. Such a configuration may be adopted in which the first hopping pattern to the fourth hopping pattern are switched corresponding to the propagation environment of the propagation channel.

Furthermore, the above-mentioned Embodiment describes the configuration in which the subcarrier mapping section applies frequency hopping, but the specification is not limited to the configuration, and such a configuration may be adopted in which frequency hopping is applied after mapping, independently of the subcarrier mapping section.

Still furthermore, the above-mentioned Embodiment exemplifies a subframe as a transmission time unit, but the specification is not limited to the configuration, and for example, a time period longer than the subframe may be a transmission time unit or time period shorter than the subframe may be a transmission time unit.

The present invention is not limited to the above-mentioned Embodiment, and is capable of being carried into practice with modifications thereof as appropriate. For example, the assignment of component carriers, the number of processing sections, processing procedures, the number of component carriers, and the aggregation number of component carriers and the like in the above-mentioned description are capable of being carried into practice with various modifications thereof without departing from the scope of invention. Further, the invention is capable of being carried into practice with modifications thereof as appropriate without departing from the scope of the invention.

The present application is based on Japanese Patent Application No.2009-063392 filed on March 16, 2009, entire content of which is expressly incorporated by reference herein.

## Claims

1. A radio base station apparatus comprising:
a transmitting section configured to transmit downlink transmission data using a system band comprised of a plurality of base frequency blocks; and
a hopping section configured to apply frequency hopping for the downlink transmission data to be transmitted by the transmitting section over the plurality of base frequency blocks.

2. The radio base station apparatus according to claim 1, wherein the hopping section applies frequency hopping for the downlink transmission data within a single base frequency block in a transmission time unit, while applying frequency hopping for the downlink transmission data over mutually different base frequency blocks in prior and subsequent transmission time units.

3. The radio base station apparatus according to claim 1, wherein the hopping section applies frequency hopping for the downlink transmission data over the plurality of base frequency blocks in a transmission time unit.

4. The radio base station apparatus according to claim 1, wherein the hopping section applies frequency hopping for the downlink transmission data over the plurality of base frequency blocks in a transmission time unit, while applying frequency hopping for the downlink transmission data over mutually different base frequency blocks in prior and subsequent transmission time units.

5. The radio base station apparatus according to claim 1, wherein the hopping section applies hopping for the downlink transmission data over different base frequency blocks in different transmission time units.

6. The radio base station apparatus according to any one of claims 1 to 5, wherein each of the base frequency blocks is a component carrier.

7. A mobile terminal apparatus comprising:
a transmission section configured to transmit uplink transmission data using a system band comprised of a plurality of base frequency blocks; and
a hopping section configured to apply frequency hopping for the uplink transmission data to be transmitted by the transmission section over the plurality of base frequency blocks.

8. The mobile terminal apparatus according to claim 7, wherein the hopping section applies frequency hopping for the uplink transmission data in a single base frequency block in a transmission time unit, while applying frequency hopping for the uplink transmission data over mutually different base frequency blocks in prior and subsequent transmission time units.

9. The mobile terminal apparatus according to claim 7, wherein the hopping section applies frequency hopping for the uplink transmission data over the plurality of base frequency blocks in a transmission time unit.

10. The mobile terminal apparatus according to claim 7, wherein the hopping section applies frequency hopping for the uplink transmission data over the plurality of base frequency blocks in a transmission time unit, while applying frequency hopping for the uplink transmission data over mutually different base frequency blocks in prior and subsequent transmission time units.

11. The mobile terminal apparatus according to claim 7, wherein the hopping section applies hopping for the uplink transmission data over different base frequency blocks in different transmission time units.

12. The mobile terminal apparatus according to any one of claims 7 to 11, wherein each of the base frequency blocks is a component carrier.

13. A radio access method comprising:
transmitting transmission data using a system band comprised of a plurality of base frequency blocks; and
applying frequency hopping for the transmission data over the plurality of base frequency blocks.
